# EUROPÄISCHE PATENTANMELDUNG

(11) **EP 2 395 477 A1**
(43) Veröffentlichungstag der Anmeldung: **14.12.2011**
(21) Anmeldenummer: 11169849.4
(22) Anmeldetag: 14.06.2011
(51) Int. Cl.: G06T 7/00, B25J 9/16, B25J 9/00

(54) **Ermittlung und Festlegung eines Lagemerkmals eines Stückguts in einer Fördervorrichtung**

(30) Priorität: 11.06.2010 AT 9632010
(71) Anmelder: STIWA Holding GmbH, 4800 Attnang-Puchheim (AT)
(72) Erfinder: Mersnik, Christian, 4800 Attnang-Puchheim (AT); Pauditz, Michael, 4690 Schwanenstadt (AT); Pucher, Christian, 4690 Pitzenbert (AT)
(74) Vertreter: Burger, Hannes

(57) **Zusammenfassung**

Die Erfindung betrifft ein Verfahren zur Ermittlung und Festlegung eines Lagemerkmals eines Stückguts (2) in einer Fördervorrichtung (1) für Stückgut (2), wobei das Stückgut von einem Fördermittel (4) von einer Aufnahmestation (3) zu einer Abgabestation (5) befördert wird. Dabei wird eine Menge von Stückgut (2) mit unbekanntem Lagemerkmal an der Aufnahmestation (3) abgegeben und vom Fördermittel (4) übernommen und einer Vorzugsausrichtung des Stückguts (2) mittels einer mechanischen Trennvorrichtung hergestellt. Ein Abbild des vereinzelten Stückguts (2) wird durch ein Bilderfassungsmittel erfasst und die Position des Stückguts (2) in Relation zum Fördermittel (4) durch ein Bildaufbereitungs- und Analysemodul ermittelt und das Stückgut durch eine Vereinzelungsvorrichtung (17) an der Abgabestation (5) bereit gestellt. Es wird zumindest ein Stückguttyp an der Aufnahmestation (3) abgegeben und ferner wird bei der Lageerkennung zusätzlich eine Typerkennung durchgeführt, welche aus dem erfassten Abbild den jeweiligen Stückguttyp und die Ausrichtung des Stückguts in Relation zum Fördermittel (4) ermittelt und wobei die Typ- und Lageerkennung stetig durchgeführt wird.

## Beschreibung

Die Erfindung betrifft ein Verfahren zur Ermittlung und Festlegung eines Lagemerkmals eines Stückguts in einer Zuführvorrichtung für Stückgut.

Bei der Beförderung von Stückgut von einer Aufnahme zu einer Abgabestation ist es meist erforderlich, das Stückgut derart zu manipulieren, damit dies an der Abgabestation in einer definierten Art und Weise abgegeben bzw. bereitgestellt werden kann. Stückgut kann nun bspw. in einer weitestgehend relativen Ordnung vorliegen, oder als Schüttgut, in einer weitestgehenden Unordnung. Schüttgut zeichnet sich insbesondere dadurch aus, dass eine Ausrichtung, also ein Lagemerkmal des aufgebrachten Schüttguts, nicht angegeben werden kann, sodass zwischen der Aufnahme und der Abgabestation bevorzugt ein Ausrichtungsvorgang erfolgen wird. Dazu ist es bekannt, das vom Fördermittel transportierte Stückgut abschnittsweise von einer optischen Bilderfassungsvorrichtung zu erfassen und mittels einer Bildanalyse die Ausrichtung der einzelnen Stückgüter zu bestimmen und darauf basierend einen Ausrichtvorgang zu initiieren, sodass das Stückgut in einer bestimmten Ausrichtung an der Abgabestation bereitgestellt werden kann.

Dazu zeigt beispielsweise die EP 1 513 749 B 1 eine Vorrichtung, bei der Stückgut mittels eines Schwingförderers von einer Speicherzone, über eine Distributionszone, zu einer Selektionszone transportiert wird, wobei im Bereich der Selektionszone eine optische Bilderfassungsvorrichtung angeordnet ist. Die Teile werden dabei von der Schwingerförderfläche in den Erfassungsbereich der Kamera bewegt, woraufhin von dieser ein Abbild der Teile erfasst wird, welches ausgewertet wird, um darauf basierend eine Greifvorrichtung selektiv anzusteuern, um spezifische Teile von der Schwingförderfläche abzunehmen. Während der Bilderfassung und während des gesamten Greifvorgangs ist die Schwingförderfläche nicht aktiv, sodass die Teile im Erfassungsbereich unter keinen Umständen eine Bewegung durchführen.

Ferner zeigt der Stand der Technik Vorrichtungen bzw. Verfahren, die einen Stückguttyp, oder einen eingeschränkten Satz von Typen, verarbeiten können. Bei Wechsel auf einen anderen Stückguttyp ist das System neu zu konfigurieren bzw. auf den neuen Stückguttyp einzulernen, was immer mit einem deutlichen Aufwand bzw. einer längeren Betriebsunterbrechung einhergeht.

Die Aufgabe der Erfindung liegt darin ein Verfahren zu schaffen, welches den Bereitstellungsdurchsatz einer Fördervorrichtung für Stückgut erhöht und gleichzeitig eine vereinfachte Anpassung an unterschiedliche zu befördernde Stückguttypen ermöglicht.

Die Aufgabe der Erfindung wird durch ein Verfahren gelöst, welches die Schritte Zuführung, Einzelteilseparation, Lageerkennung und Stückgutabgabe umfasst. Erfindungsgemäß wird zumindest ein Stückguttyp an der Aufnahmestation abgegeben und bei der Lageerkennung zusätzlich zur Ermittlung der Position des Stückguts in Relation zum Fördermittel, eine Typerkennung durchgeführt, bei der der jeweilige Stückguttyp und ferner die Ausrichtung des Stückguts in Relation zum Fördermittel ermittelt wird. Von besonderer Bedeutung am erfindungsgemäßen Verfahren ist, dass die Typ- und Lageerkennung stetig durchgeführt wird.

Erfindungsgemäß wird bei der Zuführung zumindest ein Stückguttyp mit unbekanntem Lagemerkmal an der Aufnahmestation abgegeben, wobei im Unterschied zu bekannten Verfahren die Verarbeitung eines beliebig ausgerichteten und insbesondere nicht typreinen Stückgutmaterials möglich ist. Bei bekannten Verfahren ist entweder eine sortenreine Zuführung erforderlich oder ist das Verfahren bei einer gemischten Zuführung lediglich im Stande einem spezifischen Stückguttyp zu erkennen. Demgegenüber kann das erfindungsgemäße Verfahren im Durchlaufverfahren eine beliebige Stückgutmischung in beliebiger Ausrichtung verarbeiten.

Bei der Zuführung wird das Stückgut an der Aufnahmestation abgegeben und dann vom Fördermittel übernommen, wobei hier bereits ein Vorbereitungsschritt der Einzelteilseparation erfolgen kann, indem das Fördermittel das abgegebene Stückgut selektiv übernimmt, beispielsweise indem nur eine gewisse Menge von Stückgut je Zeiteinheit vom Fördermittel übernommen werden kann. Bei der Einzelteilseparation wird jedenfalls mittels einer mechanischen Trennvorrichtung die Lage bzw. Ausrichtung des Stückguts am Fördermittel derart beeinflusst, dass je Flächeneinheit des Fördermittels nur eine minimale Anzahl von Stückgut vorhanden ist, wobei ein Stückgut je Flächeneinheit bevorzugt ist.

Ein wesentlicher Vorteil des erfindungsgemäßen Verfahrens liegt nun in der Lage- und Typerkennung, da im Gegensatz zu bekannten Verfahren damit neben einer Ermittlung der relativen Position des Stückguts am Fördermittel, auch noch der Stückguttyp selbst ermittelt werden kann, sodass neben einer reinen Unterteilung in Gut- und Schlechtteile auch noch eine individuelle Weiterbehandlung basierend auf dem erkannten Stückguttyp möglich ist.

Wesentlicher Vorteil des erfindungsgemäßen Verfahrens ist jedoch, dass die Lage und Typerkennung stetig durchgeführt wird, also im Gegensatz zu bekannten Verfahren keine Unterbrechung der Förderung der Stückgutteile erforderlich ist. Gerade das bei bekannten Verfahren erforderliche Beschleunigen und Abbremsen des Fördermittels, um die Stückgutteile in den Erfassungsbereich zu bewegen und dort während der Bilderfassung zu halten, birgt mehrere Nachteile. Einerseits kann durch die Beschleunigung und Verzögerung eine unerwünschte Bewegung des Stückguts erfolgen, was gegebenenfalls zu einer Beschädigung bzw. zu einem erhöhten Verschleiß des Stückguts und/oder des Fördermittels führen kann. Auch ist mit einer stetigen Durchführung der Typ- und Lageerkennung ein weitestgehend kontinuierlicher, harmonischer Transport des Stückguts von der Aufnahme zu der Abgabestation möglich, wobei insbesondere eine Taktung der Förderung des Stückguts nicht erforderlich ist.

Von Vorteil ist eine Weiterbildung, nach der die Vereinzelungsvorrichtung das Stückgut aufnimmt und in einer festlegbaren Ausrichtung und/oder an einer festlegbaren Position bereitstellt. Wird das Stückgut in einer festlegbaren Ausrichtung an der Abgabestation bereitgestellt, hat dies den Vorteil, dass einem nachgelagerten Be- bzw. Verarbeitungsschritt das Stückgut in einer spezifischen Orientierung bereitgestellt werden kann, worauf unmittelbar mit der weiteren Be- bzw. Verarbeitung des Stückguts fortgefahren werden kann. Die Vereinzelungsvorrichtung kann beispielsweise eine Greifvorrichtung aufweisen, die das Stückgut aufnimmt und aufgrund der Kenntnis der relativen Lage am Förderband und der relativen Ausrichtung zum Förderband, eine Koordinatentransformation durchführt, sodass das Stückgut in der gewünschten Ausrichtung und an der gewünschten Position an der Abgabestation bereitgestellt werden kann. Zur Erzielung der gewünschten Ausrichtung sind gegebenenfalls ein zwischengelagerter Absetzschritt und/oder eine mehrteilige Vereinzelungsvorrichtung vorgesehen, um so einen Schwenkbereich bzw. Ausrichtbereich zu erreichen, der mit einer einzelnen Vereinzelungsvorrichtung nicht möglich wäre. Nach der anspruchsgemäßen Weiterbildung ist es ferner möglich, das Stückgut an einer festlegbaren Position bereitzustellen, was im Wesentlichen einem Kommissioniervorgang entspricht. Dabei ist es unerheblich, in welcher Ausrichtung das Stückgut bereitgestellt wird, es ist nur sicherzustellen, dass ein erkannter Stückguttyp an einer bestimmten Position der Abgabestation bereitgestellt wird. Beispielsweise kann die Abgabestation eine bestimme Anzahl möglicher Positionen aufweisen und die Vereinzelungsvorrichtung ist dabei im Wesentlichen eine Lenkvorrichtung, die das erkannte Stückgut zur jeweiligen zugeordneten Position lenkt, bzw. nicht erkannten oder nicht verarbeitbares Stückgut in einen Auffangabschnitt leitet.

Ein Vorteil des erfindungsgemäßen Verfahrens liegt auch darin, dass gemäß einer Weiterbildung das Stückgut in loser Schüttung zugeführt wird, da beispielsweise von einem vorgelagerten Fertigungsprozess das Stückgut übernommen werden muss, ohne dass dabei eine spezifische Ausrichtung herstellbar wäre. Auch kann beispielsweise in einem Kommissioniersystem die zu kommissionierenden Stückgüter in statistisch entsprechend passender Verteilung zusammengefügt und an der Aufnahmestation abgegeben werden, um dann vom erfindungsgemäßen Verfahren entsprechend selektiv aufbereitet zu werden, um so bspw. eine sortenreine Trennung herzustellen.

Von Vorteil ist ferner, wenn das Stückgut auf einem Stückgutträger zugeführt wird, da somit bereits eine grobe Vorausrichtung möglich ist. Auch wird bei einem Stückgutträger bereits ein größerer Separationsgrad gegeben sein, beispielsweise kann je Stückgutträger vorgesehen sein, dass nur ein Stückgut am Träger angeordnet ist.

Von Vorteil ist eine Weiterbildung, nach der bei der Lage- bzw. Typerkennung ein Höhenprofil des Stückguts als Abbild des vereinzelten Stückguts erfasst wird, wobei aus dem Höhenprofil ein Histogramm gebildet wird, welches mit hinterlegten Referenz-Histogrammen vergleichen wird, wobei basierend auf diesem Vergleich, der Stückguttyp ermittelt wird. Durch die Erfassung eines Höhenprofils ist im Gegensatz zu einer bekannten, zweidimensionalen Umrisserkennung auch eine Volumensbestimmung möglich, wodurch eine vereinfachte Bestimmung der Ausrichtung des Stückguts relativ zum Fördermittel möglich ist. Bevorzugt wird das Höhenprofil als eine Folge zweidimensionaler Abbilder einer Höhenschnittlinie erfasst, was den Vorteil hat, dass ein dreidimensionales Abbild des erfassten Objekts mit einer deutlich verringerten Datenmenge erfasst werden kann, da die Bildung des dreidimensionalen Models in einem nachfolgenden Aufbereitungsschritt, insbesondere durch die Ermittlung eines Histogramms aus dem Höhenprofil bzw. den Höhenschnittlinien erfolgt. Im Gegensatz zu bekannten Verfahren wird das Stückgut hier also dreidimensional betrachtet bzw. verarbeitet, wobei aufgrund der anspruchsgemäßen Weiterbildung nur ein deutlich geringerer Datenaufwand erforderlich ist. Auch ist durch den Vergleich von Histogrammen, insbesondere durch Vergleich des ermittelten Histrogramms mit den Referenz-Histogrammen eine deutliche Steigerung der Verarbeitungsgeschwindigkeit möglich, wobei dennoch ein Vergleich dreidimensionaler Modelle erfolgt.

Ein Vorteil des erfindungsgemäßen Verfahrens liegt auch darin, dass gemäß einer Weiterbildung durch Hinterlegung eines weiteren Referenz-Histogramms, die Typ- und Lageerkennung für einen neuen Stückguttyp konfiguriert wird. Bei bekannten Verfahren besteht zumeist die Schwierigkeit, das Verfahren auf einen neu zu erkennenden Stückguttyp zu konfigurieren. Dazu sind meist aufwändige Einlernvorgänge erforderlich, welche zumeist an der Zuführvorrichtung für Stückgut durchgeführt werden müssen und diese für den bestimmungsgemäßen Einsatz nicht verfügbar machen. Da aufgrund einer Weiterbildung die Ermittlung des Stückguttyps durch einen Histogrammvergleich erfolgt und ein Referenz-Histogramm beispielsweise von einem Produktionsplanungssystem ermittelt wird, ist jederzeit, insbesondere auch im laufenden Betrieb, eine Anpassung der Erkennungsmöglichkeiten an einen Stückguttyp gegeben. Ein neues Referenz-Histogramm wird beispielsweise in einem Speichermittel der Erkennungsvorrichtung abgelegt und steht dann sofort zur Erkennung von Stückguttypen zur Verfügung.

Erfindungsgemäß wird für ein Stückgut die Position und die Ausrichtung des Stückguts in Relation zum Fördermittel ermittelt, wobei gemäß einer Weiterbildung aus dieser Position und der Ausrichtung eine Transformationsinformation ermittelt wird. Für die weitere Be- bzw. Verarbeitung des Stückguts ist es nun erforderlich, das Stückgut in einer definierten Weise auszurichten bzw. zu bewegen, um es der nachgelagerten Be- bzw. Verarbeitungsvorrichtung zuführen zu können, wobei die Möglichkeiten der Selektionsvorrichtung zur Weiterbewegung bzw. Ausrichtung des Stückguts berücksichtig werden müssen. Die Transformationsinformation kann nun dahingehend ausgestaltet sein, dass beispielsweise im Fall eines Robotergreifers als Teil der Vereinzelungsvorrichtung bereits jene Information ermittelt wird, die der Greifer benötigt, um auf kürzest möglichem Weg das Stückgut greifen zu können und entsprechend bereitstellen zu können. Ferner kann die Transformationsinformation auch eine Kennung aufweisen, mit der die Vereinzelungsvorrichtung ermitteln kann, welches Stückgut greifbar ist bzw. auf welche Weise es gegriffen werden kann, insbesondere aus welcher Richtung der Zugriff auf das Stückgut erfolgen soll. Durch diese Weiterbildung wird insbesondere ein erhöhter Durchsatz erreicht, da sich beispielsweise die Wegzeiten der Vereinzelungsvorrichtung minimieren lassen und ferner eine verbesserte Zugriffssicherheit gegeben ist.

Eine Weiterbildung kann darin bestehen, dass aus der Transformationsinformation eine Qualitätskennzahl und/oder eine Teilestatistik ermittelt werden. Die Transformationsinformation weist Merkmale auf, aus denen eine nachgelagerte Vereinzelungsvorrichtung jene Information ermitteln kann, die erforderlich ist, um das Stückgut zu greifen bzw. entsprechend zu manipulieren, um es an einer vorgegeben Position bzw. in einer gewünschten Ausrichtung bereitstellen zu können. Aufgrund konstruktiver Gegebenheiten des Stückguts kann es vorkommen, dass das Stückgut am Fördermittel eine Ausrichtung einnimmt, die für die weitere Verarbeitung ungünstig ist und somit eine nachgelagerte Manipulation oftmals nicht möglich ist. Das Stückgut wird dann beispielsweise in eine Auffangvorrichtung übergeben bzw. wiederum in den Kreislauf eingeführt, um bei einem neuen Durchlauf gegebenenfalls weiter verarbeitet zu werden. Aus der Transformationsinformation lässt sich nun ableiten, wenn ein Stückguttyp oftmals eine ungünstige Ausrichtung einnimmt und somit nicht weiter verarbeitet werden kann, was sich insbesondere auf die Qualitätskennzahl der erfolgreich verarbeiteten Stückgüter negativ auswirken wird. Daraus kann nun ein Konstrukteur des Stückguts konstruktive Maßnahmen ableiten, um beispielsweise das Stückgut derart umzugestalten, dass dieses am Fördermittel eine Vorzugsausrichtung einnimmt, wodurch es von der nachgelagerten Vereinzelungsvorrichtung besser weiterverarbeitet werden kann und somit die Qualitätskennzahl steigt.

Ferner besteht die Möglichkeit aus der Transformationsinformation eine Teilestatistik zu ermitteln, was beispielsweise für Kommissionieranlagen von Vorteil ist. Beim Kommissionieren ist aus einer Teilevielfalt einzelner Stückgüter jeweils eine bestimmte Anzahl eines Stückguttyps einer weiteren Verarbeitung zuzuführen. Um einen möglichst hohen Durchsatz zu erreichen, ist es erforderlich, dass die einzelnen Stückguttypen ihres Bedarfs entsprechend in der entsprechenden statistischen Verteilung an der Aufnahmestation abgegeben werden und vom Fördermittel zur Abgabestation transportiert werden. Wird nun beispielsweise von einem Stückguttyp zu wenig bei der Aufnahmestation abgegeben, wird sich das auf den Durchsatz einer Kommissionierungsvorrichtung auswirken, da die Zeit bis zur Kommissionierung steigen wird. Durch die Ermittlung und anschließende Auswertung der Teilestatistik lässt sich nun sehr früh erkennen, wenn sich die statistische Zusammensetzung der Stückguttypen ändert, sodass darauf basierend eine Information für eine vorgelagerte Stückgutbereitstellung generiert werden kann, um die gewünschte Stückguttypverteilung wieder herzustellen.

Eine Weiterbildung nach der aus der Transformationsinformation eine Auswahlinformation für die Vereinzelungsvorrichtung ermittelt wird, hat den Vorteil, dass die Vereinzelungsvorrichtung unmittelbar jene Stückgüter selektieren kann, welche für die weitere Verarbeitung in der richtigen Lage bzw. einer weiterverarbeitbaren Ausrichtung am Fördermittel verfügbar sind. Insbesondere ist es jedoch möglich, dass diese Auswahlinformation nur für jene Stückgüter erstellt wird, die unter Kenntnis der translatorischen und rotatorischen Bewegungsfreiheit der nachgelagerten Vereinzelungsvorrichtung von dieser erfasst werden können. Befindet sich ein Stückgut beispielsweise außerhalb des Erfassungsbereichs der Vereinzelungsvorrichtung oder liegt es in einer Ausrichtung vor, die von der Vereinzelungsvorrichtung nicht weiter verarbeitet werden kann, kann dies in der Auswahlinformation hinterlegt sein bzw. kann für dieses Stückgut keine Auswahlinformation erstellt werden. Insbesondere kann ferner ein Optimierungsalgorithmus der Vereinzelungsvorrichtung die Auswahlinformation auswerten und darauf basierend, die Reihenfolge ermitteln, in welcher die Stückgüter vom Fördermittel übernommen und an der Abgabestation bereitgestellt werden. Durch eine Optimierung des Zugriffspfades der Vereinzelungsvorrichtung kann ein deutlich erhöhter Durchsatz erreicht werden, da mehr Stückgut je Zeiteinheit erfasst werden kann und somit nicht in eine Auffangvorrichtung bzw. zurück zur Aufnahmestation verbracht werden muss.

Für manche Stückguttypen kann es von Vorteil sein, wenn dieses nicht der Vereinzelungsvorrichtung zugeführt wird, sondern gemäß einer Weiterbildung vom Fördermittel zu einem manuellen Bedienplatz befördert wird. Beispielsweise kann Stückgut aufgrund seiner Größe bzw. geometrischen Struktur für die Vereinzelungsvorrichtung schwierig zu behandeln sein, sodass es von Vorteil ist, wenn dieses Stückgut manuell ausgerichtet bzw. vereinzelt wird, um dann beispielsweise wieder der Abgabestation zugeführt zu werden. Das erfindungsgemäße Verfahren ist insbesondere dazu ausgebildet, eine Vielzahl unterschiedlicher Stückguttypen befördern zu können und für jeden Stückguttyp die Position bzw. Ausrichtung als Lagemerkmal festlegen zu können.

Von Vorteil ist ferner eine Weiterbildung, nach der die Einzelteilseperation mittels einer Vibrationstrennung erfolgt, da beispielsweise durch eine spezifisch gesteuerte Bewegung zur Bildung der Vibration, eine teile schonende Separation möglich ist. Auch kann die Vibration eine Bewegungskomponente in einer Vorzugsrichtung ausbilden, sodass zusammen mit der Einzelteilseperation auch ein Transport des Stückguts möglich ist, wodurch die Einzelteilseparation auch einen Teil des Fördermittels bilden kann.

Von Vorteil ist ferner, wenn die Einzelteilseperation mittels mechanisch konstruktiver Merkmale des Stückguts erfolgt, da beispielsweise durch Vorsprünge, Anbauten und/oder Materialkonzentrationen eine Beeinflussung des Schwerpunkts bzw. einer Vorzugsausrichtung erreicht werden kann, sodass mittels der mechanischen Trennvorrichtung beispielsweise eine Abstreifvorrichtung, ein gerichteter Luftstrahl, eine schiefe Ebene und/oder aufgrund einer Magnetwirkung, das Stückgut eine Vorzugsausrichtung einnehmen wird und somit eine für die weitere Verarbeitung günstige Ausrichtung bzw. Lage des Stückguts am Fördermittel gewährleistet ist. Die konstruktiven Merkmale können beispielsweise auch derart gebildet sein, dass sie spezifisch für die Einzelteilseperation gebildet werden und in einem nachgelagerten Ver- bzw. Bearbeitungsschritt vom Stückgut getrennt werden.

Zur Maximierung des Durchsatzes, insbesondere um eine möglichst hohe und konstante Bereitstellung von Stückgut an der Abgabestation zu gewährleisten, ist es von Vorteil, wenn bei der Einzelteilseperation ein kontinuierlicher Einzelteilstrom hergestellt wird. Für jedwede nachgelagerte Ver- bzw. Bearbeitungsvorrichtung ist es nachteilig, wenn Stückgut sehr unregelmäßig vom Fördermittel bereitgestellt wird. Insbesondere ist es auch für die Auslastung der Vereinzelungsvorrichtung vorteilhaft, wenn diese mit einem kontinuierlichen Einzelstrom arbeiten kann, da eine derartige Vereinzelungsvorrichtung zumeist eine im Wesentlichen festgelegte Verarbeitungsgeschwindigkeit, beispielsweise in Form eines Taktzyklusses aufweist und somit insbesondere dann optimal arbeitet, wenn ein möglich konstanter und kontinuierlicher Zustrom von Stückgut gegeben ist. Dies ist insbesondere gegenüber dem Stand der Technik von Vorteil, da beim erfindungsgemäßen Verfahren keine Unterbrechung der Teilebeförderung zur Erfassung des Stückguttyps bzw. zur Bestimmung der Position und Ausrichtung des Stückguts und anschließenden Manipulation erforderlich ist.

Zum Ausgleich unterschiedlicher Verarbeitungsgeschwindigkeiten der Abgabe- bzw. Aufnahmestation, bzw. zur Anpassung der Fördergeschwindigkeit des Stückguts zur Zubringung zur Lageerkennung bzw. Stückgutabgabe ist es von Vorteil, wenn beim Transport des Stückguts von der Aufnahme- zur Abgabestation, eine Kumulierung und/oder eine Distribuierung des Stückguts erfolgt. Wird beispielsweise Stückgut bei der Aufnahmestation in einer geringeren Geschwindigkeit abgegeben als die Abgabestation zur Weiterverarbeitung in der Lage ist, ist es von Vorteil, wenn eine Kumulierung des Stückguts erfolgt, um so eine entsprechende Menge von Stückgut zur Abgabestation zu befördern. Beispielsweise können dazu mehrere Aufnahmestationen vorgesehen sein, wobei das Fördermittel derart ausgebildet ist, dass die übergebenen Stückgüter der einzelnen Aufnahmestationen kumuliert zusammengeführt werden und dann zur Abgabestation transportiert werden.

Eine ähnliche Situation jedoch mit unterschiedliche Funktionalität ergibt sich, wenn eine Distribuierung des Stückguts erfolgt, da somit eine Verlangsamung des Teilestroms möglich ist bzw. eine Aufteilung des an der Aufnahmestation abgegebenen Stückguts beispielsweise auf mehrere Separationsvorgänge bzw. auf mehrere Vorrichtungen zur Lageerkennung bzw. zur Stückgutabgabe aufgeteilt werden kann. Mit der anspruchsgemäßen Weiterbildung ist somit eine Anpassung der Verarbeitungsgeschwindigkeit zwischen der Aufnahme- und der Abgabestation möglich, um eine Vielzahl möglicher vor- bzw. nachgelagerter Vorrichtungen mit dem erfindungsgemäßen Verfahren bedienen zu können.

Eine Weiterbildung besteht ferner darin, dass die Einzelteilseparation kontaktlos auf das Stückgut wirkt, insbesondere wird ein pneumatischer Impuls auf das Stückgut ausgeübt. Beispielsweise kann eine steuerbare Luftdüse einen konzentrierten Luftstrahl auf das Stückgut abgeben, um so eine Stückgutansammlung am Fördermittel zu trennen und eine möglichst gute Aufteilung in einzelne Stückgüter herzustellen.

Neben einer pneumatisch wirkenden Separation kann auch eine mechanisch wirkende Separation erfolgen, bspw. in dem ein eine Stoß- oder Verdrehvorrichtung einen entsprechenden mechanischen Impuls auf das Stückgut ausübt. Auch dadurch soll eine möglichst gute Aufteilung in einzelne Stückgüter erzielt werden.

Um die Einzelteilseparation angepasst durchführen zu können, ist es gemäß einer Weiterbildung vorgesehen, mittels eines kontaktlos wirkenden Erfassungsmittels eine Stückgutansammlung zu erkennen. Eine Einzelteilseparation ist insbesondere nur dann erforderlich, wenn Stückgut in einer Ansammlung vorliegt, andernfalls kann durch den Separationsvorgang das Gegenteil erreicht werden und sich eine Stückgutansammlung bilden.

Die Erfindung wird auch durch eine Vorrichtung gelöst, bei der ein Fördermittel Stückgut von einer Aufnahme zu einer Abgabestation befördert, wobei ferner eine optische Bilderfassungsvorrichtung und ein Analyse- und Auswertemodul vorhanden ist. Die Vorrichtung weist ferner zumindest eine mechanisch wirkende Separationsvorrichtung und eine Vereinzelungsvorrichtung auf.

Nach einer erfindungsgemäßen Weiterbildung wird das Stückgut in einer festlegbaren Ausrichtung an der Abgabestation bereitgestellt, wobei eine Weiterbildung von Vorteil ist, nach der die Vereinzelungsvorrichtung als Robotergreifer ausgebildet ist, da somit das Stückgut gezielt gegriffen werden kann und aufgrund der Bewegungsfreiheit eines derartigen Robotergreifers, gezielt ausgerichtet an der Ausgabestation bereitgestellt werden kann. Nach einer erfindungsgemäßen Weiterbildung wird ferner eine Transformationsinformation ermittelt, die direkt vom Robotergreifer übernommen und angewendet werden kann, um somit die Greifvorrichtung entsprechend ausgerichtet an das am Fördermittel befindliche Stückgut hinzu bewegen kann, dieses vom Fördermittel abzunehmen, auszurichten und an der Abgabestation bereitzustellen. Insbesondere ist es ferner möglich, dass das Stückgut direkt an eine Aufnahmevorrichtung einer nachgelagerten Be- bzw. Verarbeitungsvorrichtung übergeben wird, sodass zusätzliche Bedienhandlungen nicht erforderlich sind. Insbesondere lässt sich durch eine derartige Vereinzelungsvorrichtung die Freiheitsgrade bzw. Lagemerkmale des Stückguts beliebig genau festlegen.

Erfindungsgemäß wird das Stückgut auch an einer festlegbaren Position bereitgestellt, wobei in diesem Fall die spezifische Ausrichtung des Stückguts nicht oder nur von geringer Bedeutung ist, sodass bei Ausbildung der Vereinzelungsvorrichtung als Richtungslenker das vom Fördermittel antransportierte Stückgut an die gewünschte Position geleitet werden kann. Bei der Kommissionierung wird zumeist lediglich eine Lenkung des Stückgut in eine bestimmte Position gefordert, wo es von einer Kommissions-Aufnahmevorrichtung übernommen wird. Auch kann es erforderlich sein, Stückgut welches nicht eindeutig identifiziert werden kann bzw. welches an einer Position bzw. in einer Ausrichtung am Fördermittel vorhanden ist, dass eine weitere Verarbeitung nicht möglich ist, in eine Auffangvorrichtung bzw. wieder zurück in die Typ- bzw. Lageerkennung gelenkt werden soll. Der Richtungslenker kann beispielsweise als mechanisch wirkende Lenkschikane, als druckluftgesteuerter Impulsgeber und/oder beispielsweise als Falltürverzweiger gebildet sein. Bevorzugt wird das Stückgut dabei möglichst schonend vom durch den Förderweg in Richtung zur gewünschten Abgabeposition abgelenkt.

Da das erfindungsgemäße Verfahren bzw. die erfindungsgemäße Vorrichtung eine Mehrzahl unterschiedlicher Stückguttypen verarbeiten kann, ist es von Vorteil, wenn die Aufnahmestation eine Mehrzahl von Zuführvorrichtungen aufweist, da somit jede Zuführvorrichtung für einen spezifischen Stückguttyp optimiert werden kann, diesen also angepasst übernehmen und an das Fördermittel übergeben kann. Beispielsweise kann die Zuführvorrichtung dazu ausgebildet sein, Stückgut von einer Palettenzuführung aufzunehmen. Eine weitere Zuführvorrichtung kann dafür optimiert sein, Stückgut, welches beispielsweise in einer Schütte abgegeben wird, auf zunehmen und dem Fördermittel bereitzustellen. Auch kann durch diese Weiterbildung eine Kumulierung erreicht werden, in dem Stückgut bei mehreren Zuführvorrichtungen abgegeben wird, welche das Stückgut dann in einer höheren Dichte an das Fördermittel übergeben.

Zur Verarbeitung einer größeren Vielfalt einzelner Stückguttypen ist es ferner von Vorteil, wenn die Aufnahmestation eine Auswahlvorrichtung aufweist, um das Stückgut selektiv einer Separationsvorrichtung zuzuführen. Da die Separationsvorrichtung aus dem, an der Aufnahmestation abgegebenen Stückgutvorrat einen möglichst gleichmäßigen Teilestrom herstellen soll, wobei die Separationsvorrichtung spezifisch für eine Klasse von Stückguttypen optimal ausgelegt ist, kann bei Vorhandensein mehrerer Separationsvorrichtungen die Aufnahmestation bzw. die Auswahlvorrichtung eine Vorauswahl treffen, um das Stückgut jener Separationsvorrichtung zuzuführen, die zur Verarbeitung der Stückgutklasse am besten geeignet ist. Dazu wird die Aufnahmestation eine grobe Voraberkennung aufweisen, um beispielsweise das Gewicht bzw. geometrische Abmessungen des zu verarbeitenden Stückguts zu erkennen bzw. kann vorgesehen sein, dass bei der Abgabe des Stückguts an der Aufnahmestation eine grobe Klassifizierung erfolgt, wodurch das Stückgut dann selektiv der Separationsvorrichtung zugeführt wird.

Von Vorteil ist ferner, wenn das Auswertemodul eine Schnittstelle zu einem Produktionsplanungssystem aufweist, da somit ein direkter Zugriff auf Konstruktionsdaten der einzelnen Stückguttypen gegeben ist. Beispielsweise kann das Produktionsplanungssystem ein Datenaufbereitungsmodul aufweisen, welches für einen Stückguttyp zumindest ein Histogramm generiert, sodass zum Zeitpunkt der Zuführung des Stückguts zur Aufnahmestation das Referenz-Histogramm bereits in einem Speicher des Analyse- und Auswertemoduls hinterlegt ist, sodass ohne aufwändigen Einlern- bzw. Konfigurationsaufwand, das erfindungsgemäße Verfahren bzw. die erfindungsgemäße Vorrichtung einen neuen Stückguttyp unmittelbar verarbeiten kann.

Zur Erzielung eines möglichst hohen Durchsatzes bzw. zur Vermeidung und frühzeitigen Erkennen von Fehlerquellen ist es von Vorteil, wenn das Analyse- und Auswertemodul ein Simulationsmodul aufweist, welches bevorzugt dazu ausgebildet ist, eine schrittweise Prüfung der Verfahrensschritte durchzuführen, ohne dass diese am Echtsystem ausgeführt werden müssen. Insbesondere ist es mit diesem Simulationsmodul möglich, konstruktive Parameter, welche sich im Histogramm abbilden, zu prüfen, in wie weit dadurch eine möglichst gute Separierung erreicht werden kann. Insbesondere ist es somit möglich, bereits bei der Konstruktion des Stückguts, Merkmale am Stückgut anzubringen, um somit unter Kenntnis der Charakteristik des erfindungsgemäßen Verfahrens einen möglichst hohen Durchsatz, also eine möglichst zuverlässige Festlegung eines Lagemerkmals des Stückguts zu gewährleisten, ohne dafür aufwändige Versuchsreihen durchführen zu müssen.

Eine vorteilhafte Weiterbildung besteht darin, dass das Fördermittel durch einen Bandförderer und/oder einen Stückgutträger gebildet ist, da somit eine möglichst große Vielfalt von Stückgut befördert werden kann. Beispielsweise kann es vorgesehen sein, dass das Stückgut bereits auf einem Stückgutträger an der Aufnahmestation abgegeben wird, welcher von dieser übernommen wird und somit der Stückgutträger als Fördermittel in der erfindungsgemäßen Vorrichtung dient und an der Abgabestation an eine nachgelagerte Vorrichtung abgegeben wird. Ein Stückgutträger hat beispielsweise ferner den Vorteil, dass dieser von einem Transportsystem übernommen werden kann, beispielsweise von einem Lineartransportsystem, wodurch sich komplexe, erfindungsgemäße Vorrichtungen mit einer Mehrzahl von Aufnahme- und Abgabestationen, Separationsvorrichtungen, sowie Typ- und Lagemerkmalserkennungen ausbilden lassen. Ein Bandförderer hat den Vorteil, dass recht einfach und kostengünstig ein weitläufiges Fördermittel aufgebaut werden kann, wobei insbesondere auch eine hohe Transportgeschwindigkeit erreichbar ist.

Aufgrund der geometrischen Abmessungen bzw. konstruktiver Details kann es vorkommen, dass Stückgut, wenn es vom Fördermittel transportiert wird, aufgrund der Bewegung des Fördermittels einen nicht stabilen Lagezustand aufweist, also ein Lagemerkmal wie die Position und/oder Ausrichtung am Fördermittel ändert. Für das erfindungsgemäße Verfahren ist es aber wesentlich, dass das Stückgut, wenn es sich am Fördermittel befindet, insbesondere nach der Separationsvorrichtung seine Lage und Ausrichtung relativ zum Fördermittel nicht mehr ändert. Dazu kann beispielsweise das Fördermittel strukturierte Stückgut-Aufnahmeabschnitte aufweisen, beispielsweise Rippen, Vertiefungen, sowie Noppen in bzw. an denen Stückgut bevorzugt ausrichten wird. Ferner kann auch die Auflagefläche des Fördermittels eine spezifische Oberflächenstruktur aufweisen, beispielsweise mit einem hohen Haftreibekoeffizienten, sodass Stückgut gut von der Oberfläche des Fördermittels gehalten wird. Auch kann das Fördermittel bereits einen Teil der Separationsvorrichtung bilden, auch sind dadurch entsprechende Vorbereitungsschritte möglich, da beispielsweise eine entsprechend strukturierte Oberfläche bei der Aufnahme des Stückguts von der Aufnahmestation bereits in einer Vorzugsrichtung vom Fördermittel aufgenommen werden kann und somit eine verbesserte bzw. vereinfachte Separierung des Stückguts möglich ist. Hat Stückgut beispielsweise eine sehr labile Schwerpunktslage, beispielsweise wenn konvexe Oberflächenabschnitte aufweist, wird ein Fördermittel mit Vertiefungen, welche diesen konvexen Oberflächenabschnitt entsprechen, besonders vorteilhaft sein, da sich Stückgut bevorzugt in diesen Vertiefungen ausrichten wird und somit in einer Vorzugslage gehalten wird.

Zur Bildung komplexer und insbesondere individuell anpassbar und möglichst universell einsetzbarer Vorrichtungen ist es von Vorteil, wenn das Fördermittel mehrere Förderabschnitte aufweist, da somit einfach eine Erweiterungsmöglichkeit gegeben ist, indem ein Förderabschnitt getauscht wird, um somit beispielsweise eine weitere Separationsvorrichtung integrieren zu können. Auch im Hinblick auf eine Kumulierung bzw. Distribuierung des Stückguts ist es von Vorteil, wenn mehrere Förderabschnitte vorhanden sind, da durch Zusammenführung bzw. Aufteilung die gewünschte Stückgutverteilung am Fördermittel erreicht werden kann.

Vorteilhaft ist ferner, wenn ein Förderabschnitt eine Schwingförderfläche aufweist, die eine Bewegung parallel und/oder normal zur Förderfläche ausführt, da dadurch eine gezielte Ausbildung eines Bewegungsvektors und somit die Bildung eines Förderwegs möglich ist. Bevorzugt ist hier insbesondere, dass das Bewegungsmaß in jeder Komponentenrichtung individuell beeinflussbar ist, da dadurch beispielsweise eine besonders starke Vibration bei geringer Vorwärtsbewegung sowie gegebenenfalls eine gerichtete Vibrationsbewegung gebildet werden kann. Insbesondere ist es von Vorteil, wenn die Schwingförderfläche neben der Separierung aufgrund der Vertikalbewegung (in Z-Richtung) auch eine Bewegung in Vorwärtsrichtung durchführen kann, da somit kein zusätzliches Antriebsmittel zur Bewegung des Stückguts entlang des Förderwegs möglich ist.

Eine vorteilhafte Weiterbildung besteht ferner darin, dass die Schwingförderfläche ein Antriebsmittel aufweist, welches eine spezifisch steuerbare Bewegung ausführen kann, da dadurch eine weitestgehend beliebige Festlegung des Schwingungsvektors durchgeführt werden kann.

Zur Erzielung einer Einzelteilseparation weist gemäß einer Weiterbildung die Separationsvorrichtung ein Pneumatiksystem auf, bspw. ein Druckluftsystem, welches zumindest einen Druckgaserzeuger und eine steuerbare Druckgas-Abgabevorrichtung umfasst. Dadurch kann gezielt, insbesondere in der abgegebenen Menge und direkt damit verknüpft, im abgegebenen Druck, ein pneumatischer Impuls auf eine Stückgutansammlung gerichtet werden, wodurch die Ansammlung aufgelöst und eine Separation hergestellt wird. Von Vorteil ist bspw. eine Weiterbildung nach der die Druckgas-Abgabevorrichtung in ihrer Ausrichtung und/oder Position relativ zur Stückgutansammlung positioniert werden kann. Dazu kann diese bspw. auf einer Schwenkvorrichtung angeordnet sein. Auch ist es von Vorteil, wenn die Druckgas-Abgabevorrichtung mehr als einen Impuls abgeben kann bspw. in dem mehrere Abgabevorrichtungen vorhanden sind, die ggf. einen Impuls in unterschiedliche Richtungen abgeben können.

Neben kontaktlos wirkenden Systemen zur Separation, kann auch mittels mechanisch wirkenden Systemen eine Stückgutsansammlung aufgelöst werden. In Weiterbildungen kann die Separationsvorrichtung bspw. eine Impulsgabevorrichtung bzw. eine Rotationsvorrichtung aufweisen, mittels denen jeweils gezielt ein mechanischer Impuls, ein Stoß oder ein Drehimpuls, auf die Stückgutansammlung einwirken Da bei einer Stückgutansammlung die einzelnen Stückgüter zumeist übereinander liegen werden kann mit dieser Weiterbildung bspw. eine Trennung der zuunterst liegenden Stückgüter erreicht werden, wodurch sich die Ansammlung auflösen wird. Auch hier ist es von Vorteil, wenn der Impuls mehrfach einwirken kann, bspw. in dem mehrere Impulsabgabevorrichtung gestaffelt angeordnet sind, um so eine Stückgutansammlung entlang des Förderwegs sukzessiv zu Separieren. In einer Weiterbildung kann die Separationsvorrichtung auch eine Abstreifvorrichtung aufweisen, die angehäuftes Stückgut im Weitertransport behindert.

Um die Separationsvorrichtung gezielt abgestimmt auf eine Stückgutansammlung einwirken lassen zu können ist es von Vorteil, wenn gemäß einer Weiterbildung die Separationsvorrichtung ein kontaktlos wirkendes Erfassungsmodul für Stückgutansammlungen aufweist. Insbesondere gilt es eine Stückgutansammlung zu erkennen und zu ermitteln, wie stark Stückgut angesammelt ist, also wie intensiv die Separation erfolgen muss. Beispielsweise kann mittels einer optischen Erfassungsvorrichtung in der Art einer Lichtschrankenanordnung eine Ansammlung dadurch ermittelt werden, dass eine Lichtschranke nur für eine maximale Zeit unterbrochen sein darf bzw. das eine maximale Höhe des Stückguts am Fördermittel nicht überschritten werden darf. Des Weiteren ist es möglich, dass das Erfassungsmodul als Ultraschall- oder Hochfrequenz-Abtastsystem ausgebildet ist und so bspw. eine Kontur ermittelt.

Zum besseren Verständnis der Erfindung wird diese anhand der nachfolgenden Figuren näher erläutert.

Es zeigen jeweils in stark schematisch vereinfachter Darstellung:
- Fig. 1: eine Ausbildung einer Vorrichtung zur Durchführung des erfindungsgemäßen Verfahrens;
- Fig. 2: eine Darstellung der schrittweisen Festlegung der Lagemerkmale nach Durchführung der Verfahrensschritte;
- Fig. 3: eine weitere Ausbildung einer Vorrichtung zur Durchführung des erfindungsgemäßen Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

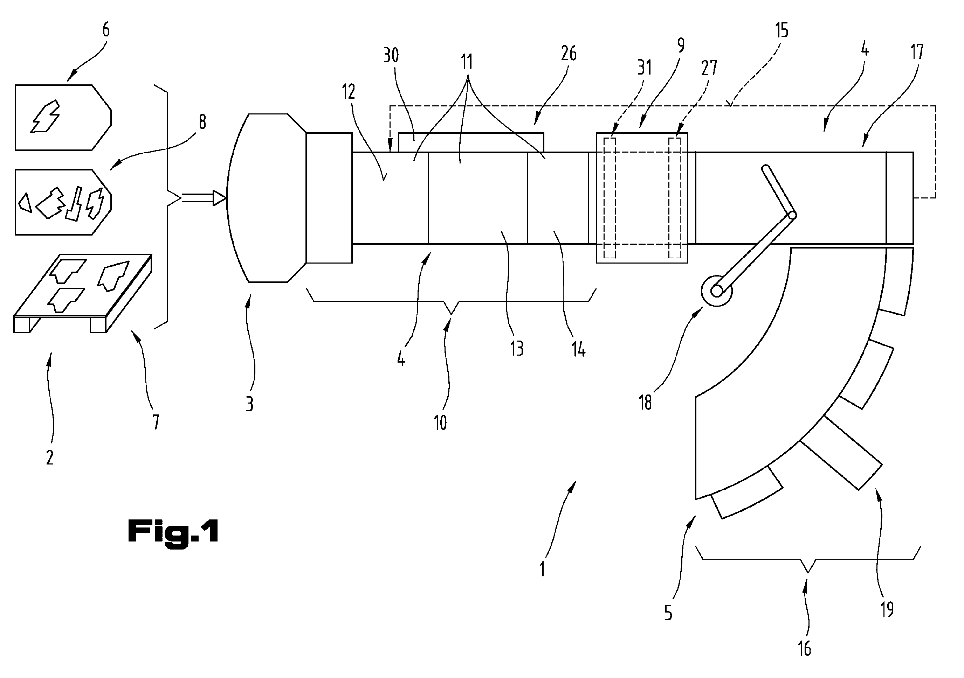

Fig. 1 zeigt eine Fördervorrichtung 1 zur Förderung von Stückgut 2 von einer Aufnahmestation 3 mittels eines Fördermittels 4 zu einer Abgabestation 5. Vom Vorteil am erfindungsgemäßen Verfahren ist nun, das Stückgut 2 in vielfältiger Form an der Aufnahmestation 3 abgegeben werden kann. Gegenüber dem Stand der Technik ist von Vorteil, dass neben sortenreinem Stückgut in loser Schüttung 6 und sortenreinem Stückgut in grober Vororientierung 7, auch typgemischtes Stückgut in loser Schüttung 8 vom erfindungsgemäßen Verfahren verarbeitet werden kann. Sortenreines Stückgut in loser Schüttung 6 bedeutet, dass nur ein Stückguttyp vorhanden ist, dessen Ausrichtung aber unbekannt ist, da Stückgut beispielsweise in Schütte an der Aufnahmestation 3 abgegeben wird. Bei sortenreinem Stückgut in grober Vororientierung 7 wird ein Stückguttyp beispielsweise auf einer Palette oder einem Stückgutträger der Aufnahmestation 3 zugeführt, wobei bereits eine grobe Vororientierung des Stückguts auf diesem Träger möglich ist, beispielsweise kann das Stückgut durch die Aufnahme auf dem Träger in einer Vorzugsrichtung vorliegen, die exakte Detailausrichtung ist jedoch ggf. nicht bekannt.

Das erfindungsgemäße Verfahren bzw. die erfindungsgemäße Vorrichtung ist jedoch in vorteilhafter Weise in der Lage, auch Stückgut verarbeiten zu können, welches als so genannter gemischter Satz, also eine statistisch verteilte Zusammenstellung mehrerer Stückguttypen vorliegt, wobei von keinem Stückguttyp ein Lagemerkmal, also eine relative Position und Drehung um die Raumachsen, in Bezug auf die Zuführung bzw. auf das Fördermittel, bekannt ist.

Von der Aufnahmestation 3 bis zur Typ- und Lageerkennung 9 wird das aufgebrachte Stückgut 2 vom Fördermittel 4 transportiert, wobei in diesem ersten Abschnitt 10 jene Verfahrensschritte durchgeführt werden, die sicherstellen sollen, dass bei der Typ- und Lageerkennung 9 ein kontinuierlicher und gleichmäßiger Strom einzelner Stückgüter gegeben ist. In diesem ersten Abschnitt 10 wird das Stückgut 2 vom Fördermittel 4 übernommen und von einer Separationsvorrichtung 26 einer Einzelteilseparation unterzogen. Dies kann beispielsweise dadurch erfolgen, dass das Fördermittel 4 einzelne Förderabschnitte 11 aufweist, welche beispielsweise eine unterschiedlich ausgebildete Stückgutaufnahmeoberfläche 12, einen Vibrationsabschnitt 13 und/oder einen Abschnitt 14 mit Rotationstrennelementen aufweist. Weitere Beispiele für mögliche Ausbildungen der Förderabschnitte 11 sind ein Magnethochförderer, ein Hochtransport mit einem Reibband, ein Hochtransport mit einer schrägen Abwurfkante. Ferner ist es möglich, eine Separierung der Stückgüter durch Abstreifvorrichtungen zu erreichen, bei denen Stückgut unter einer Bürstvorrichtung durchgefördert wird und dadurch eine Separierung erreicht wird. Eine Rotationstrennvorrichtung kann beispielsweise mehrere gegenläufig rotierende Scheiben aufweisen, wodurch eine Stückgutansammlung soweit neu orientiert wird, dass die Ansammlung aufgelöst wird. Ebenso können Förderabschnitte 11 durch Bandförderer mit unterschiedlichen Fördergeschwindigkeiten gebildet werden, wodurch wiederum eine Stückgutansammlung aufgelöst wird und somit ein Strom separierter, einzelner Stückgüter die Typ- und Lageerkennung 9 erreicht. Um die Einzelteilseparation gezielt einsetzen zu können, ist es von Vorteil, wenn mittels eines Erfassungsmittels 30 eine Stückgutansammlung erkannt wird. Ein separierter Stückgutstrom ist insbesondere für einen möglichst hohen Durchsatz des erfindungsgemäßen Verfahrens bzw. der Vorrichtung von Vorteil, da somit möglichst wenig nicht verarbeitbares Stückgut über einen Rückführweg 15 zurück in den Verarbeitungskreis geführt werden muss.

Von der Typ- und Lageerkennung 9 wird nun das zugeführte, separierte Stückgut klassifiziert und werden Lagemerkmale festgelegt, wobei gegenüber dem Stand der Technik insbesondere von Vorteil ist, das im Wesentlichen keine Einschränkung hinsichtlich der Verarbeitbarkeit unterschiedlicher Stückguttypen gegeben ist, da die erfassten Höhenschnittlinien in ein Histogramm konvertiert werden und durch Vergleich mit hinterlegten Referenz-Histogrammen der jeweilige Stückguttyp und ferner die Ausrichtung am Fördermittel ermittelt wird. Gegenüber dem Stand der Technik ist von besonderem Vorteil, dass sowohl die Typ- und Lageerkennung 9 als auch die nachgelagerte Vereinzelung bzw. Bereitstellung des Stückguts an der Abgabestation 5, ohne Bewegungsunterbrechung des Fördermittels erfolgt.

Im zweiten Abschnitt 16 wird das erkannte Stückgut nach Stückguttyp und/oder unter Herstellung einer bestimmten Ausrichtung an der Abgabestation 5 bereitgestellt. Beispielsweise kann die Vereinzelungsvorrichtung 17 einen Greifer 18 aufweisen, der Stückgut vom Fördermittel 4 aufnehmen kann, eine Transformationsinformation auf das Stückgut anwenden kann, um das Stückgut dann in einer spezifischen Ausrichtung an einer spezifischen Abgabeposition 19 der Abgabestation 5 bereitzustellen. Beispielsweise ist so eine gezielte und insbesondere spezifisch ausgerichtete Übergabe des Stückguts an einen nachfolgenden Ver- bzw. Bearbeitungsschritt möglich. Die Vereinzelungsvorrichtung 17 kann ferner als Richtungslenkvorrichtung ausgebildet sein, beispielsweise wenn keine gezielte Übergabe sondern lediglich eine Lenkung zu Kommissionierpositionen erforderlich ist. In diesem Fall wird das vom Fördermittel antransportierte und erkannte Stückgut lediglich in seiner weiteren Förderrichtung bzw. seinem Förderweg abgelenkt, um so einer spezifischen Abgabeposition 19 der Abgabestation 5 zugeführt zu werden. Auch sind beispielsweise Kombinationen beider Ausprägungen möglich, wobei einer als Greifer ausgebildeten Vereinzelungsvorrichtung eine Richtungslenkvorrichtung nachgelagert ist, um so beispielsweise bestimmte Stückguttypen vom Fördermittel abzunehmen und einer bestimmten Abgabeposition zuzuführen und die restlichen Stückguttypen in unspezifischer Ausrichtung, aber typselektiv weiteren Abgabestationen zuzuführen.

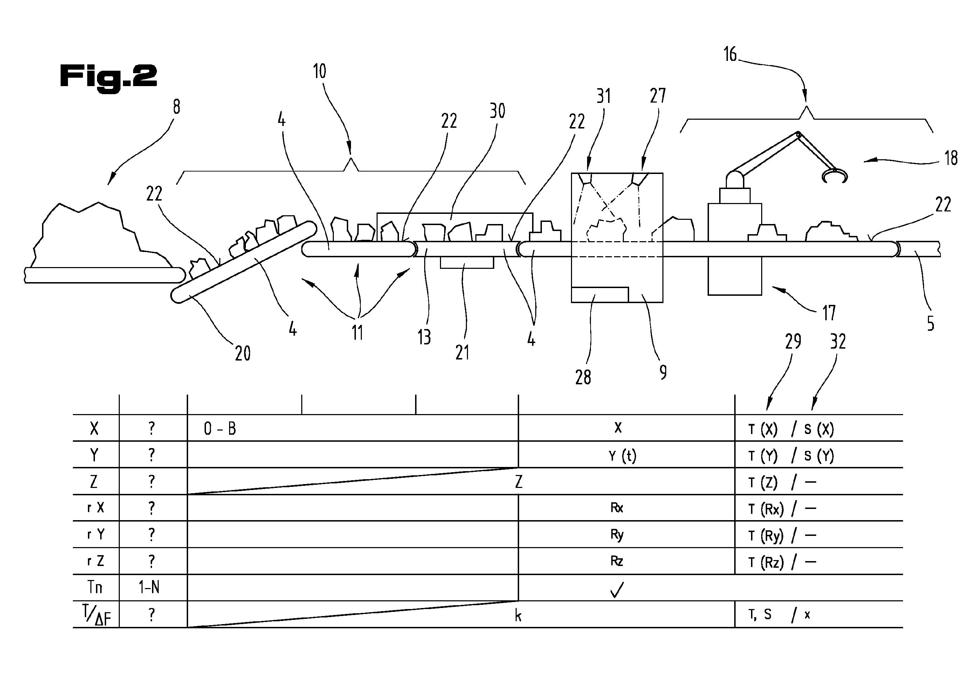

Fig. 2 zeigt schematisch die Festlegung der Lagemerkmale entlang einer beispielhaften Vorrichtung zur Durchführung des erfindungsgemäßen Verfahrens, wobei tabellarisch dargestellt ist, durch welchen Verfahrensschritt welches Lagemerkmal festgelegt werden kann. Beispielhaft wird dies für typgemischtes Stückgut in loser Schüttung 8 dargestellt, welches auf der Aufnahmestation 3 abgegeben wurde. Das Stückgut 2 wird vom Fördermittel 4 von der Aufnahmestation 3 übernommen und über die Typ- und Lageerkennung 9 und die Vereinzelungsvorrichtung 17 zur Abgabestation 5 transportiert. Die Verfahrensschritte bzw. die einzelnen Vorrichtungsteile im ersten Abschnitt 10 dienen dazu, aus einem ungeordneten Stückguthaufen 8, einen Strom einzelner, separierter Stückgüter zu bilden. Im dargestellten Beispiel wird das Stückgut von einem Fördermittel 4 übernommen, welches beispielsweise als Hochtransportförderer 20 ausgebildet ist, wobei dieser ferner ein Reibband oder einen Magnetbandförderer aufweisen kann. Durch diesen Hochtransport wird in einem ersten Schritt aus dem Stückguthaufen möglichst selektiv Stückgut übernommen und dadurch eine erste Vorseparierung durchgeführt. In weiteren Förderabschnitten kann nun mittels unterschiedlich ausgebildeter Fördermittel 4 eine Separierung erreicht werden, insbesondere ist in Fig. 2 ein Vibrationsabschnitt 13 vorhanden, der mittels einer gerichteten bzw. ungerichteten Vibration eine weitere Separation erreicht. Dazu weist der Vibrationsabschnitt 13 ein Antriebsmittel 21 auf, welches das Fördermittel 4 derart in Schwingung versetzten kann, dass beispielsweise mittels einer vertikalen Vibration eine Separation der Teile erreicht wird und zusätzlich mittels einer horizontal gerichteten Vibration, ein Transport des Stückguts in Förderrichtung bzw. entlang des Förderwegs erreicht werden kann. Die Vorrichtung zur Typ- und Lageerkennung 9 umfasst ein Leuchtmittel 31, bevorzugt eine Linienlichtquelle, und eine Bilderfassungsvorrichtung 27, wobei von einem Analyse- und Auswertemodul 28 die erfassten Höhenschnittlinien in ein Histogramm umgewandelt werden, wodurch eine einfache Vergleichbarkeit mit Referenz-Histogrammen gegeben ist. Insbesondere ist ohne Einlernvorgänge die Typ- und Lageerkennung durch Hinterlegung weiterer Referenz-Histogramme auf neue Stückguttypen konfigurierbar, wobei dies auch im laufenden Betrieb möglich ist, sodass es bei Umstellung auf einen anderen Stückguttyp bzw. eine Erweiterung der Erfassungsmöglichkeit, kein Umrüstaufwand erforderlich ist.

Im zweiten Abschnitt 16 ist für jedes Stückgut die Position am Fördermittel und die relative Ausrichtung bekannt, sodass von einer bspw. als Greifvorrichtung ausgebildeten Vereinzelungsvorrichtung 17 ermittelt werden kann, ob das Stückgut gegriffen werden kann bzw. dass unter Anwendung der Transformationsinformation, das Stückgut vom Fördermittel abgenommen und an der Abgabestation 5 in einer festgelegten Ausrichtung bereitgestellt werden kann.

In der dargestellten Tabelle sind nun die sechs Lagemerkmale dargestellt, drei Positionsmerkmale (x,y,z) und drei Rotationsmerkmale (rx, ry, rz), mit denen sich die Lage und Ausrichtung eines Stückguts am Fördermittel exakt festlegen lässt. Die X-Koordinate ist in Breitenrichtung des Fördermittels orientiert, die Y-Koordinate in Längsrichtung, sodass durch die X- und Y-Komponente die Förderfläche 22 aufgespannt wird. Die Z-Koordinate ist normal dazu orientiert und legt den Abstand des Stückguts von der Förderfläche 22 fest. Zusätzlich ist ein Parameter angegeben, der die Erkennung des spezifischen Stückguttyps angibt (Tn). Ein weiterer Parameter gibt die Anzahl der Stückgüter je Flächeneinheit an, also wie gut der Stückgutstrom separiert ist. Im Stückguthaufen ist keiner der angegebenen Parameter bekannt, am Ende des Verfahrens, an der Abgabestation, sind im Gegensatz dazu alle Parameter bekannt.

Durch die Übernahme des Stückguts vom Fördermittel wird ein erstes Lagemerkmal des Stückguts festgelegt, die X-Koordinate des Stückguts muss nun im Bereich der Breite des Fördermittels liegen. Im ersten Abschnitt 10 wird insbesondere durch die spezifische Ausbildung der Fördermittel, beispielsweise als Vibrationselement 13, eine Ausrichtung der Stückgüter derart erreicht, dass jeweils ein Stückgut je Flächenelement am Fördermittel vorhanden ist und somit auch die Z-Koordinate des Stückguts festgelegt ist und dann beispielsweise gleich einem Oberflächenpunkt der Förderfläche 22 ist. In der Tabelle ist das durch einen ansteigenden Betrag für den Z-Wert dargestellt, wobei spätestens am Ende des ersten Abschnitts 10, vor Erreichen der Typ- und Lageerkennung 9, die Z-Koordinate festgelegt ist. Gleiches gilt für das Lagemerkmal der Teile pro Flächeneinheit () welches auch entlang des ersten Abschnitts 10 sukzessive festgelegt wird, wobei wiederum am Ende des ersten Abschnitts 10 dieses Lagemerkmal festgelegt ist. Bevorzugt wird dieses Lagemerkmal den Wert 1 aufweisen, da sich somit innerhalb eines Flächenelements lediglich ein Stückgut befindet, was für die Typ- und Lageerkennung 9 sowie die nachgelagerte Vereinzelungsvorrichtung 17 von besonderem Vorteil ist. Als Flächeneinheit wird beispielsweise jener Abschnitt auf der Förderfläche 22 festgelegt, der erforderlich ist, um ein Stückgut eindeutig identifizieren und die Lage und Ausrichtung bestimmen zu können. Ferner fließt in die Größe des Flächenabschnitts auch Charakteristika der nachgelagerten Vereinzelungsvorrichtung 17 ein, da beispielsweise ein Greifer 18, insbesondere der Greifarm, das Stückgut fassen können muss, ohne dabei mit umgebendem Stückgut bzw. dem Fördermittel 4 zu kollidieren.

Die Lagekoordinate Y, sowie die drei Ausrichtungskoordinaten (rx, ry, rz), sind im ersten Abschnitt 10 nicht näher festlegbar. Erst durch die Typ- und Lageerkennung 9 lässt sich die genaue Lage eines Stückguts auf der Förderfläche 22 festlegen, wobei für die Y-Koordinate ein zeitabhängiger Wert ermittelt wird, da das Stückgut vom Fördermittel 4 stetig in Richtung der Abgabestation 5 transportiert wird und somit der Y-Wert der Position des Stückguts auf der Förderfläche von der Fördergeschwindigkeit abhängen wird. Neben der Ermittlung der Lage des Stückguts auf der Förderfläche wird von der Typ- und Lageerkennung 9 auch die Ausrichtung des Stückguts ermittelt und ferner der Stückguttyp durch Vergleich mit hinterlegten Referenzen festgelegt.

Am Ende der Typ- und Lageerkennung 9 sind nun alle Lagemerkmale des Stückguts sowie der Stückguttyp ermittelt. Für die weitere Verarbeitung existieren nun zwei grundlegende Möglichkeiten. Das Stückgut kann gezielt spezifisch ausgerichtet an einer Abgabeposition der Abgabestation 5 bereitgestellt werden. Ferner kann das Stückgut ohne Festlegung einer spezifischen Ausrichtung aber selektiv einer Abgabeposition 19 der Abgabestation 5 zugeführt werden. In der Tabelle ist dies durch zwei mögliche Weiterbearbeitungsfunktionen dargestellt, wobei bei Anwenden einer Transformationsinformation T() 29 auf ein Lagemerkmal das Stückgut spezifisch ausgerichtet der Abgabestation 5 zugeführt wird. Ist lediglich eine spezifische Verteilung des Stückguts erforderlich, wird lediglich eine Selektionsfunktion S() 32 auf die beiden Lagekoordinaten der Förderfläche angewendet, um das Stückgut entlang des Förderwegs zu einer spezifischen Abgabeposition der Abgabestation 5 zu lenken.

Diese Darstellung soll verdeutlichen, dass aus ungeordnetem Stückgut 8 an der Aufnahmestation 3 am Ende des Verfahrens bzw. nach Durchlaufen der Vorrichtung, stückguttypspezifisch eine Weiterbehandlung möglich ist.

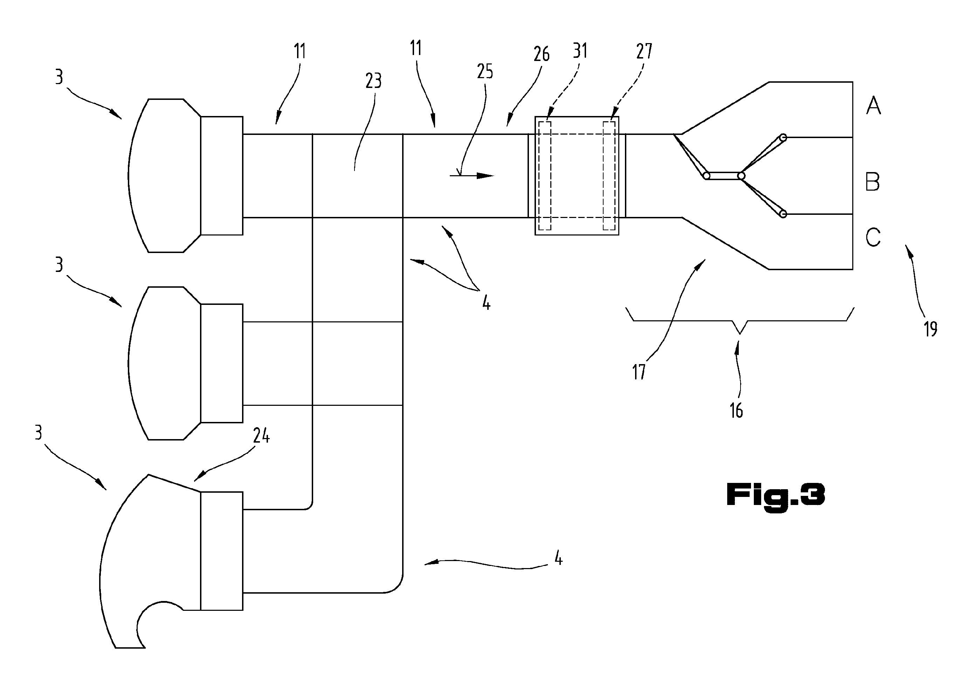

Fig. 3 zeigt eine weitere mögliche Ausbildung einer Vorrichtung zur Durchführung des erfindungsgemäßen Verfahrens. Dabei sind zwei Aufnahmestationen 3 vorgesehen, welche Stückgut übernehmen können und an das Fördermittel 4 abgeben können. Die Ausführung mit zwei Aufnahmestationen 3 hat beispielsweise den Vorteil, dass jede Aufnahmestation für einen oder mehrere Stückguttypen optimiert ausgebildet sein kann. Beispielsweise kann eine Aufnahmestation für Stückgut in loser Schüttung, die andere Aufnahmestation für Stückgut auf einem Transport- bzw. Palettenträger ausgebildet sein. Beispielsweise kann für Schüttgut der erste Förderabschnitt 11 als Stückguthochfördervorrichtung ausgebildet sein, für Stückgut auf einem Träger kann der erste Förderabschnitt 11 durch eine Übernahmevorrichtung gebildet sein, welche das Stückgut vom Träger übernimmt und an das Fördermittel 4 übergibt. In einem Zusammenführungsabschnitt 23 werden die einzelnen zuführenden Förderabschnitte zu einem gemeinsamen Stückgutstrom auf einem Fördermittel 4 kombiniert. Hier wird insbesondere darauf hingewiesen, dass aus dem Bereich der Linearfördersysteme weitere Möglichkeiten bekannt sind, wie Teileströme gelenkt und zusammengeführt werden können.

In einer erfindungsgemäßen Weiterbildung kann ferner vorgesehen sein, dass die Aufnahmestation 3 auch durch einen manuellen Bedienplatz 24 gebildet ist. Für manches Stückgut ist eine rein mechanische Separierung nicht zweckmäßig, beispielsweise wenn das Stückgut beschädigungsempfindlich bzw. eine Größe und/oder Gewicht aufweist, welches mit mechanischen Separationsverfahren bzw. Vorrichtungen nicht optimal handhabbar ist. Dieses Stückgut wird nun beispielsweise beim manuellen Bedienplatz 24 abgegeben, wo es von einem Bedienpersonal vorausgerichtet auf das Fördermittel 4 übergeben wird und somit vom erfindungsgemäßen Verfahren be- bzw. verarbeitbar wird. Ferner ist eine Ausbildung möglich, nach der derartiges Stückgut von einer beliebigen Aufnahmestation 3 vom Fördermittel 4 zu einem manuellen Bedienplatz transportiert wird, dort von einem Bediener entsprechend vorausgerichtet auf das Fördermittel zurückgegeben wird und von diesem zurück in den Prozess transportiert wird. Dazu wird das Fördermittel beispielsweise selektiv in seiner Förderrichtung steuerbar sein bzw. zwei gegenläufige Förderbahnen aufweisen, um Stückgut abseits der Hauptförderrichtung 25 zwischen den Aufnahmestationen und dem manuellen Bedienplatz bzw. gegebenenfalls mehreren, manuellen Bedienplätzen transportieren zu können.

Fig. 3 zeigt im zweiten Abschnitt 16 eine Vereinzelungsvorrichtung 17 zur spezifischen Richtungslenkung von Stückgut. Dabei wird Stückgut entsprechend dem erkannten Stückguttyp von der Vereinzelungsvorrichtung einer bestimmten Abgabestation zugeführt. Mit dieser Ausbildung ist es beispielsweise möglich, unsortiertes Stückgut zu kommissionieren, also auf eine der drei dargestellten Abgabepositionen 19 zu lenken. Hierbei ist es nicht erforderlich, die Lage und Ausrichtung des Stückguts zu erhalten, es geht lediglich darum, Stückgut typspezifisch zu verzweigen und so der Abgabeposition 19 zuzuführen.

In einer Weiterbildung kann vorgesehen sein, zwei Vereinzelungsvorrichtungen hintereinander anzuordnen, um so zuerst selektiv Stückgut vom Fördermittel abzunehmen und spezifisch ausgerichtet einer Abgabeposition zuzuführen, das verbleibende Stückgut wird von einer selektierenden Vereinzelungsvorrichtung mehreren Abgabepositionen zugeführt.

Der ganz besondere Vorteil am erfindungsgemäßen Verfahren bzw. an der Vorrichtung liegt darin, dass im Gegensatz zum Stand der Technik, stückgutreines und gemischtes Stückgut, in loser Schüttung oder bereits vorausgerichtet, verarbeitet werden kann, wobei der Transport des Stückguts von der Aufnahme- zur Abgabestation stetig erfolgt, insbesondere sind keine Förderunterbrechungen zur Durchführung der Typ- und Lageerkennung bzw. zur Durchführung der Vereinzelung erforderlich. Somit wird insbesondere ein besonders hoher und konstanter Durchsatz erreicht. Auch ist es mit dem erfindungsgemäßen Verfahren bzw. der Vorrichtung möglich, durch eine flexible Ausgestaltung des Fördermittels weitestgehend beliebige Förderbahnen ausbilden zu können, wobei insbesondere von Vorteil ist, dass manuelle Bedienplätze in den Förderstrang eingegliedert werden können und somit eine individuelle Sonderbehandlung mancher Teile möglich ist, die nach einer gegebenenfalls geringfügigen, manuellen Bedienhandlung wieder vom automatisierten Verfahren bzw. von der Vorrichtung verarbeitet werden können. Ebenfalls von besonderem Vorteil ist, dass bei der Typ- und Lageerkennung Konstruktionsparameter abgeleitet bzw. ermittelt werden können, die in die Teilekonstruktion einfliesen, um diese spezifisch ausbilden zu können, sodass der Teiledurchsatz erhöht wird, indem der Anteil an nicht greifbaren Stückgütern reduziert wird. Da beispielsweise durch eine geringfügige Änderung der konstruktiven Gestaltung von Stückgut eine bessere Separation im ersten Abschnitt erreicht wird und somit auch ein geringeres Risiko für eine fehlerhafte Erkennung bzw. eine Nichtdurchführbarkeit der Vereinzelung gegeben ist.

Die Ausführungsbeispiele zeigen mögliche Ausführungsvarianten des Verfahren zur Ermittlung und Festlegung eines Lagemerkmals eines Stückguts in einer Zuführvorrichtung für Stückgut, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Verfahrens bzw. der Vorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Fördervorrichtung
- 2: Stückgut
- 3: Aufnahmestation
- 4: Fördermittel
- 5: Abgabestation

- 6: Sortenreines Stückgut in loser Schüttung
- 7: Sortenreines Stückgut in grober Vororientierung
- 8: Gemischtes Stückgut in loser Schüttung
- 9: Typ- und Lageerkennung
- 10: Erster Abschnitt

- 11: Förderabschnitt
- 12: Oberfläche
- 13: Vibrationselement
- 14: Abschnitt
- 15: Rückführung

- 16: Abschnitt
- 17: Vereinzelungsvorrichtung
- 18: Greifer
- 19: Abgabeposition
- 20: Hochtransport-Fördermittel

- 21: Antriebsmittel
- 22: Förderfläche
- 23: Zusammenführungsabschnitt
- 24: Manueller Bedienplatz
- 25: Hauptförderrichtung

- 26: Mechanische Trennvorrichtung, Separationsvorrichtung
- 27: Bilderfassungsmittel
- 28: Bildaufbereitungs- und Analysemodul
- 29: Transformationsinformation
- 30: Erfassungsmittel

- 31: Leuchtmittel
- 32: Selektionsinformation

## Patentansprüche

1. Verfahren zur Ermittlung und Festlegung eines Lagemerkmals eines Stückguts (2) in einer Fördervorrichtung (1) für Stückgut (2), wobei das Stückgut von einem Fördermittel (4) von einer Aufnahmestation (3) zu einer Abgabestation (5) befördert wird, umfassend die Schritte:
- Zuführung:
o Abgeben einer Menge von Stückgut (2) mit unbekanntem Lagemerkmal an der Aufnahmestation (3);
o Übernahme des Stückguts (2) durch das Fördermittel (4);
- Einzelteilseparation:
o Herstellen einer Vorzugsausrichtung des Stückguts (2) mittels einer mechanischen Trennvorrichtung (26);
- Lageerkennung:
o Erfassung eines Abbilds des vereinzelten Stückguts (2) durch ein Bilderfassungsmittel (27);
o Ermitteln der Position des Stückguts (2) in Relation zum Fördermittel (4) durch ein Bildaufbereitungs- und Analysemodul (28);
- Stückgutabgabe:
o Vereinzeln des Stückguts durch eine Vereinzelungsvorrichtung (17) der Abgabestation (5);
**dadurch gekennzeichnet, dass**
- zumindest ein Stückguttyp an der Aufnahmestation (3) abgegeben wird;
- bei der Lageerkennung zusätzlich eine Typerkennung durchgeführt wird, welche aus dem erfassten Abbild den jeweiligen Stückguttyp und die Ausrichtung des Stückguts in Relation zum Fördermittel (4) ermittelt;
- die Typ- und Lageerkennung stetig durchgeführt wird;

2. Verfahren nach Anspruch 1, **dadurch gekennzeichnet, dass** die Vereinzelungsvorrichtung (17) das Stückgut (2) aufnimmt und in einer festlegbaren Ausrichtung und/oder das Stückgut (2) an einer festlegbaren Position (19) bereitstellt.

3. Verfahren nach Anspruch 1 oder 2, **dadurch gekennzeichnet, dass** das Stückgut (2) in loser Schüttung oder auf einem Stückgutträger zugeführt wird.

4. Verfahren nach einem der Ansprüche 1 bis 3, **dadurch gekennzeichnet, dass** bei der Lage- bzw. Typerkennung ein Höhenprofil des Stückguts (2) als Abbild des vereinzelten Stückguts erfasst wird, wobei aus dem Höhenprofil ein Histogramm gebildet wird, welches mit hinterlegten Referenz-Histogrammen vergleichen wird, wobei basierend auf diesem Vergleich, der Stückguttyp ermittelt wird.

5. Verfahren nach einem der Ansprüche 1 bis 4, **dadurch gekennzeichnet, dass** aus der Position und der Ausrichtung des Stückguts (2), eine Transformationsinformation (29) ermittelt wird, aus welcher Transformationsinformation (29) ferner eine Auswahlinformation für die Vereinzelungsvorrichtung (17) ermittelt wird.

6. Verfahren nach Anspruch 5, **dadurch gekennzeichnet, dass** aus der Transformationsinformation (29) eine Qualitätskennzahl und/oder eine Teilestatistik ermittelt wird.

7. Verfahren nach einem der Ansprüche 1 bis 6, **dadurch gekennzeichnet, dass** die Einzelteilseparation mittels mittels einer Vibrationstrennung oder mittels mechanisch konstruktiver Merkmale des Stückguts erfolgt.

8. Verfahren nach einem der Ansprüche 1 bis 7, **dadurch gekennzeichnet, dass** bei der Einzelteilseparation ein kontinuierlicher Einzelteilestrom hergestellt wird.

9. Verfahren nach einem der Ansprüche 1 bis 8, **dadurch gekennzeichnet, dass** beim Transport des Stückguts (2) von der Aufnahme- (3) zur Abgabestation (5), eine Kumulierung und/oder eine Distribuierung des Stückguts (2) erfolgt.

10. Verfahren nach einem der Ansprüche 1 bis 9, **dadurch gekennzeichnet, dass** die Einzelteilseparation kontaktlos wirkt, insbesondere durch Ausüben eines pneumatischen Impulses auf das Stückgut (2), oder mittels Kontaktgabemittel erfolgt, insbesondere durch einen mechanischen und/oder rotatorischen Impuls auf das Stückgut (2).

11. Verfahren nach einem der Ansprüche 1 bis 10, **dadurch gekennzeichnet, dass** die Einzelteilseparation mittels eines kontaktlos wirkenden Erfassungsmittels (30) eine Stückgutansammlung erfasst.

12. Vorrichtung zur Bestimmung eines Lagemerkmals eines Stückguts (2) in einer Fördervorrichtung für Stückgut, zur Durchführung eines Verfahren nach einem der Ansprüche 1 bis 11, umfassend
eine Aufnahmestation (3) und eine Abgabestation (5),
ein Fördermittel (4) um Stückgut (2) von der Aufnahmestation (3) zur Abgabestation (5) zu befördern,
eine optische Bilderfassungsvorrichtung (27) und ein Analyse- und Auswertemodul (28),
**dadurch gekennzeichnet, dass**
zumindest eine mechanisch wirkende Separationsvorrichtung (26) und
eine Vereinzelungsvorrichtung (17) vorhanden ist.

13. Vorrichtung nach Anspruch 12, **dadurch gekennzeichnet, dass** die Vereinzelungsvorrichtung (17) als Robotergreifer oder als Richtungslenker ausgebildet ist.

14. Vorrichtung nach einem der Ansprüche 12 oder 13, **dadurch gekennzeichnet, dass** die Aufnahmestation (3) eine Auswahlvorrichtung aufweist, um das Stückgut selektiv einer Separationsvorrichtung (26) zuzuführen.

15. Vorrichtung nach einem der Ansprüche 12 bis 14, **dadurch gekennzeichnet, dass** das Auswertemodul (28) eine Schnittstelle zu einem Produktionsplanungssystem aufweist.

16. Vorrichtung nach einem der Ansprüche 12 bis 15, **dadurch gekennzeichnet, dass** das Fördermittel (4) durch einen Bandförderer und/oder einen Stückgutträger gebildet ist, oder strukturierte Stückgut-Aufnahmeabschnitte oder mehrere Förderabschnitte (11) aufweist.

17. Vorrichtung nach Anspruch 16, **dadurch gekennzeichnet, dass** ein Förderabschnitt (11) ein Schwingförderelement (13) aufweist, die eine Bewegung parallel und/oder normal zur Förderfläche ausführt.

18. Vorrichtung nach einem der Ansprüche 12 bis 17, **dadurch gekennzeichnet, dass** die Separationsvorrichtung (26) eine mechanisch wirkende Impulsgabevorrichtung oder eine Rotationsvorrichtung oder ein Pneumatiksystem aufweist.
